# FASCICULE DE BREVET EUROPEEN

(11) **EP 3 052 438 B1**
(45) Date de publication et mention de la délivrance du brevet: **21.04.2021**
(21) Numéro de dépôt: 14780517.0
(22) Date de dépôt: 03.10.2014
(51) Int. Cl.: C01B 13/11

(54) **GENERATEUR D'OZONE**
OZONGENERATOR
OZONE GENERATOR

(30) Priorité: 04.10.2013 FR 1359658
(43) Date de publication de la demande: 10.08.2016
(73) Titulaire: Degremont Technologies AG, 8600 Dübendorf (CH)
(72) Inventeur: RAMOINO, Luca, CH-8800 Thalwil (CH); SEYRLING, Sieghard, CH-8049 Zürich (CH); MÜLLER, Marco, CH-8103 Unterengstringen (CH)
(74) Mandataire: IPAZ
(86) Numéro de dépôt international: PCT/EP2014/071248
(87) Numéro de publication internationale: WO 2015/049376

(56) Documents cités:
- WO-A1-2006/051173
- DE-A1- 3 220 018
- JP-A- S5 520 240
- US-A- 4 886 645
- US-A- 5 145 653
- DATABASE WPI Section Ch, Week 197839 Thomson Scientific, London, GB; Class E31, AN 1978-69723A XP002733165, "Ozoniser with increased efficiency - in which discharge density at ozone drain side electrodes is lower than at gas feed side electrodes", -& JP S53 96988 A ((MITQ ) MITSUBISHI ELECTRIC CORP) 24 août 1978 (1978-08-24)

## Description

L'invention est relative à un générateur d'ozone en continu, du genre du ceux qui comportent :
- au moins deux électrodes, avec un diélectrique disposé entre les électrodes, qui définissent entre elles des interstices de décharge,
- une extrémité d'entrée pour une circulation, dans les interstices, d'un gaz chargé d'oxygène jusqu' à une extrémité de sortie,
- au moins une électrode étant constituée d'au moins deux segments, disposés l'un derrière l'autre dans le sens d'écoulement du gaz,
- des moyens de refroidissement du générateur,
- et des moyens d'alimentation en courant électrique pour établir une tension entre les électrodes et provoquer des décharges dans les interstices où circule le gaz.

Un tel générateur produit de l'ozone par décharge silencieuse appelée DBD (Décharge à Barrière Diélectrique). Des générateurs de ce type sont connus, notamment d'après WO 2006/051173 et WO 2007/014474. Le champ électrique appliqué entre les électrodes génère des décharges dans le gaz contenant de l'oxygène qui s'écoule entre les électrodes. Un plasma froid est allumé dans les interstices. Les décharges de plasma conduisent à une dissociation des molécules d'oxygène et à la formation d'ozone. L'énergie pour allumer et maintenir le plasma est fournie par une unité d'alimentation électrique reliée aux électrodes.

Dans beaucoup de générateurs, les électrodes et le diélectrique sont disposés selon une structure tubulaire, et le gaz s'écoule à travers des interstices annulaires à l'intérieur d'un ou de plusieurs tubes.

JP 53-96988 montre un générateur d'ozone en continu, du genre en question, dans lequel les segments de l'électrode sont répartis en au moins deux groupes séparés électriquement, l'un des groupes étant plus proche de l'entrée de gaz, l'autre groupe plus proche de la sortie, et les moyens d'alimentation en courant électrique comprennent au moins deux étages d'alimentation électrique distincts, associés respectivement à chaque groupe de segments.

Indépendamment de la géométrie spécifique utilisée pour les électrodes, le gaz s'écoule à travers les interstices selon un flux continu, et le générateur est conçu pour que le temps de séjour du gaz soit suffisant pour obtenir en sortie la concentration d'ozone souhaitée, ce qui implique une longueur suffisante du parcours du gaz entre l'entrée et la sortie.

La production d'ozone consomme de l'énergie et l'un des buts de l'invention est de réduire cette consommation d'énergie en augmentant l'efficacité du générateur afin de produire davantage d'ozone avec une même quantité d'énergie, ou de réduire la consommation d'énergie pour une quantité d'ozone déterminée.

L'ozone, aussi bien dans la nature que dans un générateur, a tendance à se recombiner et à décliner en oxygène moléculaire. Le déclin peut être accéléré par les décharges présentes dans un générateur. Ce déclin dépend de la concentration en ozone, et augmente lorsque la concentration en ozone augmente. Il en résulte que, pour un générateur d'ozone de type donné, il existe une concentration en ozone pour laquelle la production et la destruction de l'ozone s'égalisent. Ainsi, à un générateur d'ozone, correspond une concentration maximale d'ozone qui peut être obtenue avec ce générateur. Il est donc d'un grand intérêt, pour l'industrie, de développer des générateurs capables de fonctionner à des concentrations en ozone élevées.

Le point de fonctionnement d'un générateur d'ozone est, normalement, un compromis entre :
1/ le rendement énergétique, pour lequel il est opportun de fonctionner à une basse concentration en ozone, et
2/ le coût du gaz d'alimentation et les coûts d'investissement, pour lesquels il est préférable de réduire les volumes de gaz d'alimentation et donc d'augmenter la concentration en ozone. Un autre facteur influençant les coûts d'investissement réside dans la taille du générateur d'ozone. Une amélioration de l'efficacité énergétique permet, pour une capacité de production déterminée, de réduire la taille du générateur.

L'invention a pour but, notamment, d'offrir un bon compromis conjuguant une efficacité énergétique élevée, et une concentration en ozone élevée.

L'invention assure une optimisation de l'efficacité du générateur d'ozone en agissant sur la manière dont l'énergie est fournie au système.

Selon l'invention, un générateur d'ozone du genre défini précédemment, est caractérisé en ce qu'il comporte des moyens d'optimisation de la fourniture d'énergie prévus pour commander respectivement chaque étage d'alimentation électrique et pour exploiter les différentes concentrations locales en ozone en étant propres à agir sur la puissance et/ou la tension et/ou le courant et/ou la fréquence et/ou la forme d'onde de l'alimentation et/ou, dans le cas d'une alimentation puisée, sur le rapport cyclique.

Chaque étage d'alimentation est constitué par une source d'énergie électrique indépendante.

L'électrode qui est constituée d'au moins deux groupes de segments peut être réalisée en deux parties de même taille, les deux groupes de l'électrode comportant le même nombre de segments, et le générateur comporte une source d'énergie électrique indépendante pour chaque groupe.

De préférence, pour une puissance totale P1+P2 fournie par les deux sources d'énergie associées aux deux groupes de segments, la puissance P2 fournie par la deuxième source associée à la concentration en ozone plus élevée est supérieure à celle P1 de l'autre source lorsque les niveaux de production sont relativement bas, tandis que pour des niveaux de production plus élevés, la puissance P1, fournie par la source associée à la concentration en ozone plus faible, devient supérieure à la moitié de la puissance totale fournie.

Pour d'autres modes de réalisation, la relation entre les puissances P1 et P2 peut être différente.

Le générateur peut comprendre un conteneur, fermé à ses extrémités, comportant des tubes parallèles constituant une électrode extérieure, tandis qu'une électrode intérieure est disposée dans chaque tube, l'une au moins des électrodes étant constituée d'une pluralité de segments tubulaires, disposés les uns derrière les autres, suivant le sens d'écoulement du gaz.

Avantageusement, les segments tubulaires sont répartis en deux groupes séparés électriquement par une coupure isolante, les différents ensembles de groupes 1.1a,...1.na d'une part, et 1.1b, ... 1.nb d'autre part, étant reliés électriquement en parallèle pour former deux groupes 1a, 1b, les moyens d'alimentation en courant électrique comprenant deux sources d'alimentation électrique distinctes.

Chaque électrode intérieure peut comporter quatre segments tubulaires, répartis en deux groupes séparés électriquement.

Bien entendu, le nombre de segments d'une électrode peut être différent de quatre.

L'invention s'applique à tout générateur d'ozone dans lequel le trajet du gaz entre l'entrée et la sortie présente une longueur significative. Ceci est vrai pour tous les générateurs d'ozone travaillant en continu. Dans un tel générateur, la composition chimique du gaz évolue lorsque le gaz progresse dans le générateur, la concentration en ozone augmentant de l'entrée vers la sortie.

L'invention permet de choisir, pour chaque étage d'alimentation, des paramètres optimaux pour la production d'ozone en fonction de la concentration en ozone. L'utilisation de deux, ou davantage, sources d'alimentation électrique indépendantes permet de contrôler de façon indépendante la manière dont l'énergie est fournie aux différentes sections du générateur situées entre l'entrée et la sortie, en tenant compte de la concentration moyenne en ozone dans la section considérée. Dans chaque section successive, la concentration moyenne en ozone augmente par rapport à celle de la section précédente, et la manière dont l'énergie électrique est fournie à cette section est optimisée en conséquence.

La combinaison idéale de fournitures d'énergie aux différentes sections du générateur dépend, en général, du point de fonctionnement du générateur, c'est-à-dire de la concentration en ozone en sortie, et du débit de production. Avec des sources d'alimentation indépendantes, ou avec des étages d'alimentation commandés de manière indépendante, il est possible d'optimiser la manière dont l'énergie est fournie pour un point de fonctionnement donné. L'efficacité du générateur peut être adaptée et optimisée à toute condition de fonctionnement.

L'optimisation de la fourniture d'énergie au système peut être obtenue en agissant sur la puissance, la tension, le courant, la fréquence, la forme d'onde et, dans le cas d'une alimentation puisée, sur le rapport cyclique ou cycle opératoire. Ces paramètres ne sont pas nécessairement indépendants les uns des autres, mais chacun produit un effet spécifique sur le processus de production d'ozone. Il peut être avantageux d'adapter chacun de ces paramètres à la concentration d'ozone locale mais, pour des raisons pratiques, il est plus simple de considérer l'un de ces paramètres, ou la combinaison de quelques-uns de ces paramètres. Le choix le plus adapté dépend des détails du générateur d'ozone et, en particulier, de son alimentation électrique. Toutefois, dans la plupart des cas, chaque section du générateur fonctionnera avec une densité d'énergie, et/ou une fréquence, et/ou une tension, et/ou une forme d'onde et/ou un rapport cyclique différents. Le générateur pourra ainsi fonctionner de manière efficace, et la production d'ozone pour une concentration donnée pourra être augmentée.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1-4 sont des schémas simplifiés d'un générateur d'ozone selon l'invention.
Fig. 5 est une coupe verticale axiale d'un générateur d'ozone à électrodes tubulaires selon l'invention.
Fig. 6 est un graphique illustrant la variation de l'efficacité énergétique portée en ordonnée, en pour-cent, en fonction de la production d'ozone exprimée en kg/h portée en abscisse, pour une concentration en ozone en sortie de 10 % en poids.
Fig. 7 est un graphique semblable à celui de Fig. 6 dans le cas où la concentration en ozone en sortie est de 13 % en poids, et
Fig. 8 est un diagramme illustrant la répartition de l'énergie fournie par deux sources exprimée en pour-cent et portée en ordonnée, en fonction de la production d'ozone exprimée en kg/h portée en abscisse, dans le cas de concentrations d'ozone à 10 % et 13% en poids.

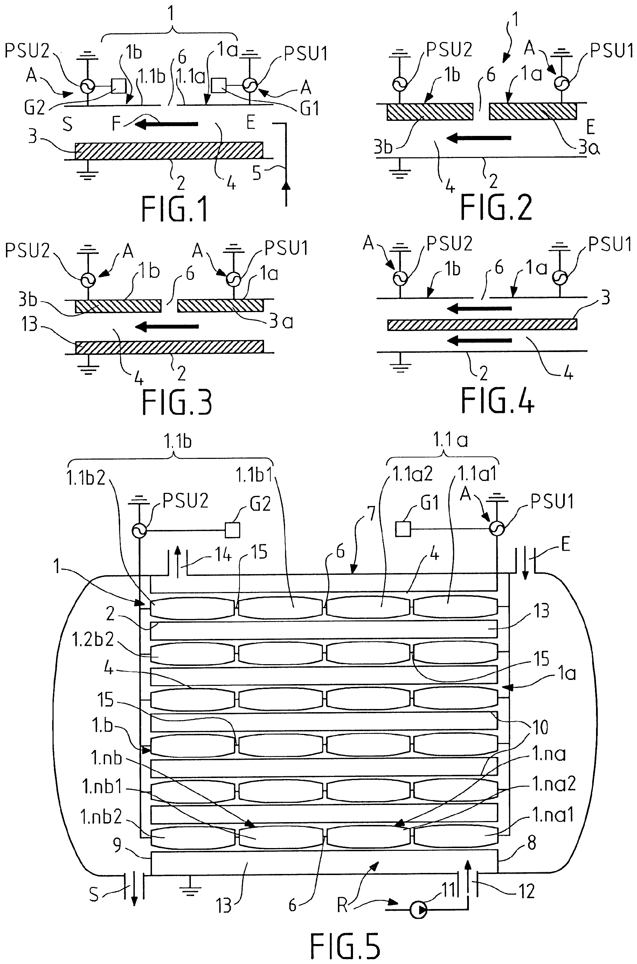

En se reportant à Fig. 1 des dessins on peut voir une représentation schématique d'un générateur d'ozone selon l'invention comportant deux électrodes 1, 2 représentées sous forme de plaques avec un diélectrique ou barrière diélectrique 3 disposée entre les électrodes, lesquelles définissent entre elles des interstices de décharge 4. Selon l'exemple de Fig. 1, la barrière diélectrique 3 est appliquée contre la face de l'électrode 2 tournée vers l'électrode 1.

Un gaz chargé d'oxygène, notamment de l'air, provenant d'une conduite 5, s'écoule dans les interstices 4 depuis une extrémité d'entrée E à une extrémité de sortie S.

Des moyens de refroidissement R des électrodes non représentés sur Figs. 1-4 mais illustrés sur Fig. 5 sont prévus, ainsi que des moyens A d'alimentation en courant électrique, en particulier en courant alternatif, pour établir une tension entre les électrodes 1, 2 et provoquer des décharges dans les interstices 4 où circule le gaz.

Au moins l'électrode 1 est constituée d'au moins deux segments 1.1a, 1.1b, disposés l'un derrière l'autre dans le sens d'écoulement du gaz représenté par une flèche F. La longueur du parcours du gaz entre les électrodes 1 et 2 est suffisante pour obtenir en sortie la concentration souhaitée en ozone, et cette concentration évolue entre l'entrée E et la sortie S.

Selon l'invention, les segments 1.1a, 1.1b de l'électrode 1 sont répartis en au moins deux groupes 1a, 1b, séparés électriquement, l'un des groupes 1a étant plus proche de l'entrée de gaz E, l'autre groupe 1b étant plus proche de la sortie S.

D'après le schéma de Fig. 1, chaque groupe 1a, 1b comporte un seul segment 1.1a, 1.1b. Toutefois, chaque groupe pourrait être constitué de plusieurs segments reliés électriquement l'un à l'autre. La séparation électrique des deux groupes 1a, 1b est schématisée par une coupure 6, isolante électriquement.

Les moyens d'alimentation A en courant électrique comprennent au moins deux étages d'alimentation électrique distincts, associés respectivement à chaque groupe 1a, 1b de segments. La fourniture d'énergie assurée par chaque étage est adaptée à la concentration en ozone au niveau du groupe considéré 1a, 1b.

Selon l'exemple représenté, les étages d'alimentation électrique de chaque groupe 1a, 1b sont constitués par deux sources d'alimentation électrique distinctes indépendantes, PSU1 et PSU2, associées respectivement à un groupe 1a, 1b. L'électrode 2 est reliée à la masse, ainsi que l'une des bornes des sources PSU1 et PSU2, l'autre borne de ces sources étant reliée au groupe associé 1a, 1b de l'électrode 1.

La fourniture d'énergie assurée par chaque source PSU1 et PSU2 est optimisée en fonction de la concentration en ozone au niveau du groupe 1a, 1b associé. L'optimisation de chaque source d'énergie peut être obtenue en agissant sur la densité d'énergie, et/ou la fréquence, et/ou la tension, et/ou la forme de l'onde et/ou le rapport cyclique des signaux de courant fournis, ce qui permet d'améliorer le rendement du générateur d'ozone.

Des moyens G1, G2 d'optimisation de la fourniture d'énergie sont prévus pour commander chaque source d'énergie. La concentration en ozone peut être mesurée à la sortie S du générateur. Dans le cas général G1 et G2 constituent un système pour commander la puissance et/ou la tension et/ou le courant et/ou la fréquence et/ou la forme d'onde de l'alimentation et/ou, dans le cas d'une alimentation puisée, pour agir sur le rapport cyclique de chacune des sources d'énergie.

Le système d'optimisation formé par G1 et G2 est prévu pour tenir compte de la concentration en ozone et assurer une variation de la puissance et/ou de la tension et/ou du courant et/ou de la fréquence et/ou de la forme d'onde de l'alimentation et/ou, dans le cas d'une alimentation puisée, pour agir sur le rapport cyclique de chacune des sources d'énergie. Le système exploite ainsi les différentes concentrations locales, indépendamment du fait que la concentration en ozone soit mesurée ou non.

Fig. 2 est un autre schéma, illustrant un générateur selon l'invention, dans lequel le diélectrique est séparé en deux barrières 3a, 3b appliquées contre les groupes 1a, 1b de l'électrode 1. Les autres éléments identiques ou semblables à des éléments déjà décrits à propos de Fig. 1 sont désignés par les mêmes références sans que leur description soit reprise.

Selon une variante, non représentée, chacune des deux électrodes peut être constituée d'au moins deux segments séparés.

Selon le schéma de Fig. 3, une barrière diélectrique 3 est prévue contre l'électrode 2 ainsi que des barrières diélectriques 3a, 3b prévues contre les groupes 1a, 1b de l'électrode 1.

Selon le schéma de Fig. 4, la barrière diélectrique 3 est prévue entre les électrodes.

Fig. 5 illustre un générateur d'ozone selon l'invention comprenant un conteneur 7, qui peut être de forme générale cylindrique ou prismatique ou autre, d'axe horizontal, fermé à ses extrémités. Le conteneur 7 comporte, au voisinage de chacune de ses extrémités longitudinales, une paroi 8, 9 orthogonale à l'axe géométrique du conteneur. Chaque paroi comporte des trous en regard de ceux de l'autre paroi. Dans ces trous, sont engagés des tubes 10 s'étendant d'une paroi 8 à l'autre paroi 9 et soudés respectivement à ces parois. Les tubes 10 peuvent être de plusieurs types, notamment tubes métalliques, tubes en verre ou tubes céramiques avec un revêtement métallique intérieur. Les tubes 10 constituent des électrodes extérieures connectées, avec le conteneur 7, au potentiel de la terre. On peut considérer que l'ensemble des tubes 10, reliés électriquement entre eux, forme une seule électrode extérieure équivalente à l'électrode 2 de Fig.1-4. La longueur des tubes 10 est suffisante, notamment de l'ordre de 2 mètres, ou plus, pour que la concentration en ozone du gaz à la sortie S soit nettement supérieure à celle du gaz qui arrive par l'entrée E.

Les moyens de refroidissement R comprennent une pompe de circulation 11 qui introduit, par une entrée 12, de l'eau de refroidissement dans un espace 13 entourant les tubes 10. Le fluide réfrigérant, à savoir l'eau, est évacué par une sortie 14.

Une électrode intérieure est disposée dans chaque tube 10. Chaque électrode intérieure est constituée d'une pluralité de segments tubulaires, en particulier métalliques, désignés par 1.1a1, 1.1a2, 1.1b1, 1.1b2 pour la première électrode. Les segments sont fermés à chaque extrémité et munis extérieurement d'une barrière diélectrique, en particulier d'un revêtement céramique. Les segments tubulaires tels que 1.1a1 ... 1.1b2 sont disposés les uns derrière les autres, suivant le sens d'écoulement du gaz, en alignement. Dans l'exemple considéré, chaque électrode intérieure est constituée par quatre segments, mais le nombre des segments pourrait être différent.

Les segments de chaque électrode intérieure sont répartis en deux groupes 1.1a et 1.1b, tous deux constitués, dans l'exemple considéré, de deux segments reliés électriquement par une connexion 15 entre leurs extrémités adjacentes. Les deux groupes 1.1a, 1.1b sont séparés électriquement par la coupure isolante électriquement 6 entre les extrémités en regard des segments voisins de chaque groupe. Le groupe 1.1a est le plus proche de l'entrée E du gaz tandis que le groupe 1.1b est plus proche de la sortie S.

Des moyens de maintien (non représentés) des segments tubulaires par rapport à l'électrode extérieure sont prévus pour la formation des interstices de décharge 4 annulaires entre la surface extérieure des segments et la surface intérieure de l'électrode extérieure.

Les différents ensembles de groupes 1.1a, 1.2a, ... 1.na, d'une part, et 1.1b, 1.2b ... 1.nb, d'autre part, sont reliés électriquement en parallèle de sorte que ces deux ensembles de groupes peuvent être considérés comme formant deux groupes 1a, 1b.

Le groupe 1a est situé dans la première moitié des électrodes extérieures, la concentration en ozone dans cette partie étant inférieure à celle présente au niveau de l'autre groupe 1b situé dans la deuxième partie de l'électrode extérieure.

Les moyens A d'alimentation en courant électrique comprennent deux sources d'alimentation électrique PSU1 et PSU2 distinctes. La source PSU1 comporte une borne reliée en parallèle aux segments du groupe 1a, l'autre borne de la source étant reliée à la masse.

La source d'alimentation PSU2 comporte une borne reliée en parallèle aux segments du groupe 1b situé vers la sortie, et une autre borne reliée à la masse.

Bien entendu, la réalisation du générateur d'ozone n'est pas limitée à l'exemple donné à propos de Fig. 5. Le nombre de groupes de segments et le nombre de segments dans chaque groupe peuvent être différents de deux, et le nombre d'alimentations électriques distinctes peut être également différent de deux et correspondre, en général, au nombre de groupes.

En variante, les deux sources d'alimentation distinctes illustrées sur Fig. 5 pourraient être remplacées par deux étages d'alimentation indépendants d'une même source électrique, les paramètres de chaque étage pouvant être réglés indépendamment de ceux de l'autre étage.

La manière dont l'énergie est délivrée à chaque groupe 1a et 1b est adaptée, quant à la source correspondante PSU1, ou PSU2, à la concentration en ozone du gaz au niveau du groupe considéré. L'adaptation peut consister en une action sur la puissance, et/ou la tension, et/ou l'intensité du courant, et/ou la fréquence, et/ou la forme d'onde et/ou, dans le cas d'une source puisée, du rapport cyclique ou cycle opératoire. La fréquence du courant délivré par les sources peut être de l'ordre de 1,45 kHz. La fréquence du courant se situe de manière générale dans la plage de 500 Hz à 50 kHz.

Des moyens G1, G2 d'optimisation de la fourniture d'énergie, semblables à ceux décrits précédemment, peuvent en outre être prévus.

Le générateur d'ozone peut être caractérisé par son efficacité énergétique. Une efficacité maximale à 100 % est définie comme celle d'un système idéal capable de produire 1.22 kg d'ozone (O₃) pour chaque kWh d'énergie fourni, pour un niveau de production donné et pour une concentration en ozone déterminée. La puissance P1 fournie par la source PSU1, et la puissance P2 fournie par l'autre source, peuvent être contrôlées indépendamment. Une même puissance totale P1+P2 peut ainsi être obtenue en utilisant différentes combinaisons de valeurs pour les puissances P1, P2 fournies par les sources PSU1 et PSU2.

Des essais ont été effectués en comparant le générateur de l'invention selon Fig. 5 avec un générateur d'ozone classique ayant pratiquement la même structure mais dont tous les segments intérieurs de l'électrode 1 étaient reliés électriquement, c'est-à-dire que la coupure 6 était remplacée par une connexion électrique, et les segments intérieurs étaient alimentés par une seule source électrique.

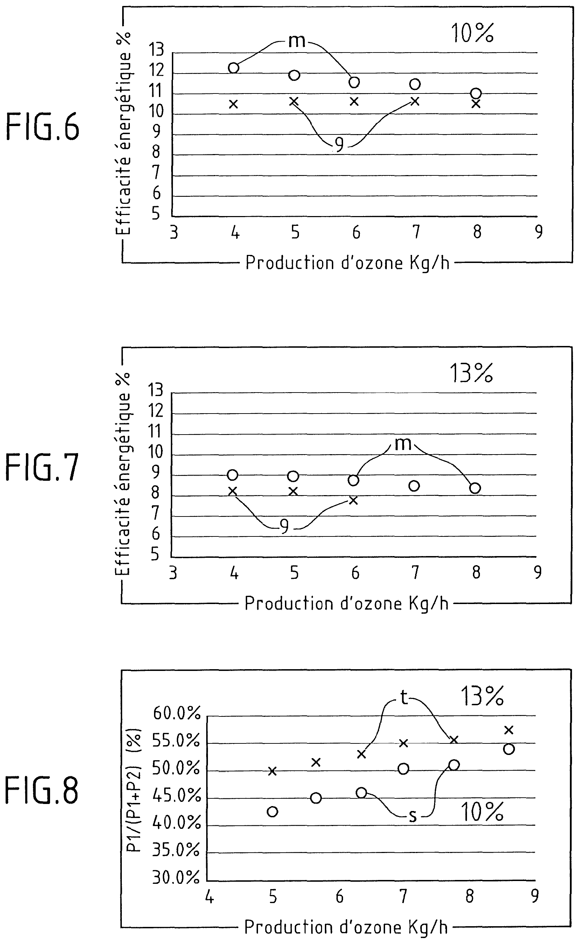

Sur les graphiques des Fig.6 et 7, le point représentatif du fonctionnement du générateur est déterminé par une abscisse correspondant à un débit de production d'ozone exprimé en kilogrammes/heure (kg/h), et par une ordonnée correspondant à l'efficacité énergétique exprimée en pour-cent de l'efficacité maximale définie précédemment.

Les graphiques des Fig. 6 et 7 comparent l'efficacité énergétique d'un générateur selon Fig. 5, dont les points de fonctionnement sont représentés par de petits cercles m, avec un générateur classique dont les points de fonctionnement sont illustrés par des croix q. La Fig. 6 correspond à la production d'un gaz sortant chargé à 10 % d'ozone en poids, tandis que la Fig. 7 correspond à la production d'un gaz sortant chargé à 13 % en poids d'ozone.

Le gain d'efficacité selon l'invention apparaît clairement sur les graphiques. Le gain est plus élevé pour les débits de production plus faibles. D'après Fig.7 avec un générateur classique, aucun point q n'est tracé au-delà de 6kg/h, car il n'est plus possible de produire un gaz chargé à 13 % en poids d'ozone pour des productions de 7 et 8 kg/h.

Dans le cas d'un générateur d'ozone selon l'invention, différentes combinaisons de fourniture d'énergie par les sources PSU1 et PSU2 sont possibles, mais ne sont pas équivalentes en termes d'efficacité énergétique. Pour l'évaluation du générateur selon l'invention, la configuration optimale d'alimentation énergétique par les deux sources PSU1 et PSU2 a été adoptée.

Les résultats fournis sur les Fig. 6 et 7 ont été obtenus dans le cas d'un générateur d'ozone selon l'invention séparé en deux parties de tailles égales, c'est-à-dire selon un rapport 0.5:0.5. Des essais ont également été effectués en utilisant différentes combinaisons de séparation électrique dans la zone de décharge active. Pratiquement, la gamme complète de combinaisons a été explorée de 0.1-0.9 à 0.9-0.1 concernant la répartition des segments. Il est apparu que le bénéfice procuré par la séparation des électrodes en deux groupes avec alimentation par deux sources distinctes ne dépend que faiblement du rapport de division des segments de l'électrode intérieure. Le rapport 0.5:0.5 a été préféré pour des raisons pratiques.

Dans le cas d'un générateur d'ozone séparé en deux parties de tailles égales, le graphique de Fig. 8 donne la répartition de la fourniture d'énergie entre les deux sources pour optimiser la production. En abscisse, est portée la production d'ozone exprimée en kg/h. En ordonnée, est porté, en pour-cent, le rapport de la puissance P1 fournie par la source PSU1, à la puissance totale P1 + P2 fournie par les deux sources. Les points représentés par de petits cercles s correspondent à une production de gaz chargé à 10 % en poids d'ozone, tandis que les points représentés par des croix t correspondent à une production de gaz chargé à 13 % en poids d'ozone.

Dans le cas de gaz chargé à 10 % d'ozone, il apparaît que, pour les niveaux de production relativement bas, par exemple d'environ 5 kg/h d'ozone, il est préférable de fournir davantage de puissance P2 par la deuxième source PSU2, soit environ 55 % de la puissance totale, tandis que la puissance P1 est d'environ 45 % de la puissance totale. La puissance fournie par chacune des sources est sensiblement la même pour une production de 7 kg/h, puis au-delà, la puissance P1 de la source PSU1 devient supérieure à la moitié de la puissance totale fournie.

L'invention peut être appliquée à tout système séparé électriquement en deux ou plusieurs groupes indépendamment de leur taille. Mais il faut que la séparation des groupes soit appliquée suivant la direction d'écoulement du gaz et que chaque section ou groupe corresponde à une concentration d'ozone (O₃) sensiblement différente.

Un point important est d'adapter la manière dont l'énergie est fournie, (dans le cas présent il s'agit de l'énergie par unité de surface de décharge active) à la concentration locale moyenne d'ozone. Bien que, dans l'exemple considéré, le générateur ait été divisé en deux parties, la solution de l'invention peut s'appliquer de la même façon à un système fractionné en plus de deux parties.

Les deux sources PSU1 et PSU2 sont régulées indépendamment pour assurer une fourniture d'énergie dédiée à chaque section. Dans l'exemple considéré, une régulation de puissance indépendante était utilisée pour les deux sources PSU1 et PSU2, et par conséquent pour la régulation de l'intensité et de la tension qui dépendent de manière univoque de la puissance.

Toutefois, une optimisation similaire peut être obtenue en agissant sur d'autres paramètres tels que la fréquence et la forme d'onde du courant alternatif appliqué aux électrodes et en adaptant ces paramètres à la concentration locale en ozone.

L'invention peut s'appliquer à tout générateur d'ozone du genre défini initialement, et dans lequel le courant de gaz contenant de l'oxygène s'écoule à travers le générateur, la concentration en ozone du gaz augmentant alors que le gaz progresse dans le réacteur ou à différents étages du réacteur.

## Revendications

1. Générateur d'ozone en continu, comportant :
- au moins deux électrodes (1,2), avec un diélectrique (3) disposé entre les électrodes, qui définissent entre elles des interstices de décharge (4),
- une extrémité d'entrée (E) pour une circulation, dans les interstices, d'un gaz chargé d'oxygène jusqu' à une extrémité de sortie (S),
- au moins une électrode (1) étant constituée d'au moins deux segments, disposés l'un derrière l'autre dans le sens d'écoulement du gaz,
- des moyens de refroidissement du générateur,
- et des moyens d'alimentation (A) en courant électrique pour établir une tension entre les électrodes et provoquer des décharges dans les interstices où circule le gaz,
les segments de l'électrode étant répartis en au moins deux groupes (1a, 1b) séparés électriquement, l'un des groupes étant plus proche de l'entrée de gaz, l'autre groupe plus proche de la sortie, et les moyens d'alimentation (A) en courant électrique comprenant au moins deux étages d'alimentation électrique distincts (PSU1, PSU2), associés respectivement à chaque groupe (1a, 1b) de segments, chaque étage d'alimentation étant constitué par une source d'énergie électrique indépendante (PSU1, PSU2),
**caractérisé en ce que** ce qu'il comporte des moyens d'optimisation (G1,G2) de la fourniture d'énergie prévus pour commander respectivement chaque étage d'alimentation électrique (PSU1, PSU2) et pour exploiter les différentes concentrations locales en ozone afin de contrôler de façon indépendante la manière dont l'énergie est fournie au différentes sections du générateur situées entre l'entrée et la sortie du gaz dans le générateur, en tenant compte de la concentration moyenne en ozone de la section considérée, en étant propres à agir sur la puissance et/ou la tension et/ou le courant et/ou la fréquence et/ou la forme d'onde de l'alimentation et/ou, dans le cas d'une alimentation puisée, sur le rapport cyclique

2. Générateur selon l'une quelconque des revendications précédentes, **caractérisé en ce que** l'électrode (1) constituée d'au moins deux groupes de segments est réalisée en deux parties de même taille, les deux groupes (1a, 1b) de l'électrode (1) comportant le même nombre de segments, et **en ce que** le générateur comporte une source d'énergie électrique indépendante (PSU1, PSU2) pour chaque groupe.

3. Générateur selon la revendication 2, **caractérisé en ce qu'**il est configuré de telle manière que pour une puissance totale (P1 + P2) fournie par les deux sources d'énergie (PSU1, PSU2) associées aux deux groupes (1a, 1b) de segments, la puissance (P2) fournie par la deuxième source (PSU2) associée à la concentration en ozone plus élevée est supérieure à celle (P1) de l'autre source (PSU1) lorsque les niveaux de production sont relativement bas, tandis que pour des niveaux de production plus élevés, la puissance (P1) fournie par la source (PSU1), associée à la concentration en ozone plus faible, devient supérieure à la moitié de la puissance totale fournie.

4. Générateur selon l'une quelconque des revendications précédentes, comprenant un conteneur (7), fermé à ses extrémités, comportant des tubes parallèles (10) constituant une électrode extérieure (2), tandis qu'une électrode intérieure est disposée dans chaque tube (10), l'une au moins des électrodes étant constituée d'une pluralité de segments tubulaires (1.1a1, 1.1a2, 1.1b1, 1.1b2, ...1.na1, 1.na2, 1.nb1, 1.nb2), disposés les uns derrière les autres, suivant le sens d'écoulement du gaz,
**caractérisé en ce que** les segments tubulaires sont répartis en deux groupes (1.1a, 1.1b ;...1.na, 1.nb) séparés électriquement par une coupure isolante (6), les différents ensembles de groupes (1.1a,...1.na) d'une part, et (1.1b, ... 1.nb) d'autre part, étant reliés électriquement en parallèle pour former deux groupes (1a, 1b),
les moyens (A) d'alimentation en courant électrique comprenant deux sources d'alimentation électrique (PSU1, PSU2) distinctes.

5. Générateur selon la revendication 4, **caractérisé en ce que** chaque électrode intérieure comporte quatre segments tubulaires, répartis en deux groupes séparés électriquement.

## Patentansprüche

1. Kontinuierlicher Ozongenerator mit:
- mindestens zwei Elektroden (1, 2) mit einem Dielektrikum (3), das zwischen den Elektroden angeordnet ist, welche zwischen sich Entladungszwischenräume (4) definieren;
- einem Einlassende (E) für die Zirkulation eines mit Sauerstoff beladenen Gases in den Zwischenräumen zu einem Auslassende (S);
- mindestens einer Elektrode (1), welche aus mindestens zwei Segmenten gebildet ist, die in Gasströmungsrichtung hintereinander angeordnet sind,
- Generatorkühleinrichtungen,
- und Stromversorgungseinrichtungen (A) zur Herstellung einer Spannung zwischen den Elektroden und Entladungen in den Zwischenräumen zu bewirken, in denen das Gas zirkuliert,
wobei die Segmente der Elektrode in mindestens zwei elektrisch getrennte Gruppen (1a, 1b) unterteilt sind, wobei eine der Gruppen näher an den Gaseinlass, die andere Gruppe näher an den Auslass angeordnet ist, und wobei die Stromversorgungseinrichtungen (A) mindestens zwei separate Stromversorgungsstufen (PSU1, PSU2) aufweisen, die jeweils jeder Gruppe (1a, 1b) von Segmenten zugeordnet sind, wobei jede Versorgungsstufe durch eine unabhängige Stromquelle (PSU1, PSU2) gebildet ist,
**dadurch gekennzeichnet, dass** er Einrichtungen (G1, G2) zur Optimierung der Energiezufuhr aufweist, die zum jeweiligen Steuern jeder Stromversorgungsstufe (PSU1, PSU2) und zur Nutzung der verschiedenen lokalen Ozonkonzentrationen vorgesehen sind, um die Art und Weise, in welcher die Energie an verschiedene, zwischen dem Gaseinlass und dem Gasauslass in dem Generator gelegene Abschnitte des Generators geliefert wird, unter Berücksichtigung der mittleren Ozonkonzentration des betreffenden Abschnitts unabhängig zu kontrollieren, wobei die Einrichtungen geeignet sind, auf die Leistung und/oder die Spannung und/oder den Strom und/oder die Frequenz und/oder die Wellenform der Versorgung und/oder, im Fall einer gepulsten Versorgung, auf das Tastverhältnis einzuwirken.

2. Generator nach einem der vorhergehenden Ansprüche, **dadurch gekennzeichnet, dass** die aus mindestens zwei Gruppen von Segmenten gebildete Elektrode (1) in zwei Teilen gleicher Größe ausgebildet ist, wobei die beiden Gruppen (1a, 1b) der Elektrode (1) die gleiche Anzahl von Segmenten aufweisen, und dass der Generator eine unabhängige Stromquelle (PSU1, PSU2) für jede Gruppe aufweist.

3. Generator nach Anspruch 2, **dadurch gekennzeichnet, dass** er derart ausgebildet ist, dass bei einer Gesamtleistung (P1 + P2), die von den beiden, den beiden Segmentgruppen (1a, 1b) zugeordneten Energiequellen (PSU1, PSU2) geliefert wird, die von der zweiten Quelle (PSU2) gelieferte Leistung (P2), die der höheren Ozonkonzentration zugeordnet ist, größer als diejenige (P1) der anderen Quelle (PSU1) ist, wenn die Produktionsniveaus relativ niedrig sind, während bei höheren Produktionsniveaus die von der Quelle (PSU1) gelieferte Leistung (P1), welche der niedrigeren Ozonkonzentration zugeordnet ist, größer als die Hälfte der gesamten zugeführten Leistung wird.

4. Generator nach einem der vorhergehenden Ansprüche, mit einem an seinen Enden geschlossenen Behälter (7) mit parallelen Röhren (10), die eine Außenelektrode (2) bilden, wobei in jeder Röhre (10) eine Innenelektrode angeordnet ist, wobei mindestens eine der Elektroden aus mehreren rohrförmigen Segmenten (1.1a1, 1.a2,1, 1.1b1, 1.1b2, ... 1.na1, 1.na2, 1.nb1, 1.nb2) besteht, die in Richtung des Gasstroms hintereinander angeordnet sind,
**dadurch gekennzeichnet, dass** die röhrenförmigen Segmente in zwei Gruppen (1.1a, 1.1 b; ... 1.na, 1.nb) unterteilt sind, die durch einen isolierenden Unterbrecher (6) elektrisch getrennt sind, wobei die verschiedenen Gruppen (1.1 a, ... 1.na) einerseits und (1.1 b, ... 1.nb) andererseits elektrisch parallel geschaltet sind, um zwei Gruppen (1a, 1b) zu bilden,
wobei die Stromversorgungseinrichtungen (A) zwei getrennte Stromversorgungsquellen (PSU1, PSU2) aufweisen.

5. Generator nach Anspruch 4, **dadurch gekennzeichnet, dass** jede innere Elektrode vier röhrenförmige Segmente aufweist, die in zwei elektrisch getrennte Gruppen unterteilt sind.

## Claims

1. A continuous ozone generator, comprising:
- at least two electrodes (1, 2), with a dielectric (3) positioned between the electrodes, which define, between them, discharge gaps (4),
- an inlet end (E) for circulation, in the gaps, of a gas charged with oxygen up to an outlet end (S),
- at least one electrode (1) being composed of at least two segments, positioned one behind the other in the direction of flow of the gas,
- means for cooling the generator,
- and means (A) for supplying with electric current, in order to establish a voltage between the electrodes and to bring about discharges in the gaps where the gas is circulating,
the segments of the electrode being divided into at least two electrically separated groups (1a, 1b), one of the groups being closer to the gas inlet and the other group being closer to the outlet, and the means (A) for supplying with electric current comprising at least two separate electrical supply stages (PSU1, PSU2) respectively associated with each group (1a, 1b) of segments, each supply stage being constituted by independent source of electrical energy (PSU1, PSU2)
**characterized in that** it comprises means (G1, G2) for optimizing the furnishing of energy which are provided in order to respectively control each electrical supply stage (PSU1, PSU2) and in order to make use of the different local concentrations of ozone in order to independently control how the energy is supplied to the different sections of the generator localized between the gas inlet and outlet in the generator, by being capable of acting on the power and/or the voltage and/or the current and/or the frequency and/or the waveform of the supply and/or, in the case of a pulsed supply, on the cyclic ratio.

2. The generator according to any of the preceding claims, **characterized in that** the electrode (1) constituted of at least two groups of segments is produced in two parts of the same size, the two groups (1a, 1b) of the electrode (1) comprising the same number of segments, and **in that** the generator comprises an independent source of electrical energy (PSU1, PSU2) for each group.

3. The generator as claimed in claim 2, **characterized in that**, it is configured in the manner that, for a total power (P1+P2) provided by the two energy sources (PSU1, PSU2) associated with the two groups (1a, 1b) of segments, the power (P2) provided by the second source (PSU2) associated with the higher concentration of ozone is greater than that (P1) of the other source (PSU1) when the production levels are relatively low, whereas, for higher production levels, the power (P1) provided by the source (PSU1) associated with the lower concentration of ozone becomes greater than half of the total power provided.

4. The generator as claimed in any one of the preceding claims, comprising a container (7), closed at its ends, comprising parallel tubes (10) constituting an external electrode (2), while an internal electrode is positioned in each tube (10), at least one of the electrodes being composed of a plurality of tubular segments (1.1a1, 1.1a2, 1.1b1, 1.1b2, ... 1.na1, 1.na2, 1.nb1, 1.nb2), positioned one behind the other, along the direction of flow of the gas,
**characterized in that** the tubular segments are divided into two groups (1.1a, 1.1b, ... 1.na, 1.nb) electrically separated by an insulating break (6), the different sets of groups (1.1a, ... 1.na), on the one hand, and (1.1b, ... 1.nb), on the other hand, being electrically connected in parallel in order to form two groups (1a, 1b),
the means (A) for supplying with the electric current comprising two separate electrical supply sources (PSU1, PSU2).

5. The generator as claimed in claim 4, **characterized in that** each internal electrode comprises four tubular segments, divided into two electrically separated groups.
